# EUROPÄISCHE PATENTSCHRIFT

(11) **EP 3 255 392 B1**
(45) Veröffentlichungstag und Bekanntmachung des Hinweises auf die Patenterteilung: **22.04.2020**
(21) Anmeldenummer: 16173366.2
(22) Anmeldetag: 07.06.2016
(51) Int. Cl.: G01F 23/284, G01S 13/34, G01S 13/42, G01S 13/02

(54) **FÜLLSTANDRADAR ZUR SENDESEITIGEN STRAHLFORMUNG MITTELS PARALLELER PHASENREGELSCHLEIFEN**
FILL LEVEL RADAR FOR BEAM FORMING USING PARALLEL PHASE-LOCKED LOOPS FROM THE TRANSMITTER SIDE
RADAR DE NIVEAU DE REMPLISSAGE POUR LA FORMATION DE FAISCEAU UTILISANT DU CÔTÉ DE L'ÉMETTEUR DES BOUCLES DE VERROUILLAGE DE PHASE EN PARALLÈLE

(43) Veröffentlichungstag der Anmeldung: 13.12.2017
(73) Patentinhaber: VEGA Grieshaber KG, 77709 Wolfach (DE)
(72) Erfinder: WÄLDE, Steffen, 78078 Niedereschach (DE); WELLE, Roland, 77756 Hausach (DE); GRIESSBAUM, Karl, 77796 Mühlenbach (DE)
(74) Vertreter: Maiwald Patent- und Rechtsanwaltsgesellschaft mbH

(56) Entgegenhaltungen:
- EP-A1- 2 315 045
- EP-A2- 2 166 671
- WO-A1-2007/085941
- GB-A- 2 106 647
- US-A1- 2012 154 203
- US-A1- 2015 355 313

## Beschreibung

### Gebiet der Erfindung

Die Erfindung betrifft die dreidimensionale Füllstandmessung. Insbesondere betrifft die Erfindung ein Füllstandradar zur Bestimmung der Topologie einer Oberfläche eines Füllguts, ein Verfahren zum Bestimmen der Topologie der Füllgutoberfläche, ein Programmelement und ein computerlesbares Medium.

### Hintergrund

Im Bereich der dreidimensionalen Füllstandmessung mit Füllstandradargeräten ergeben sich völlig neue Anwendungszielsetzungen. Konnte bislang bei Schüttgutmessungen nur ein grober Messwert der aktuellen Füllhöhe ermittelt werden, so eröffnet sich bei der dreidimensionalen Füllstandmessung die Möglichkeit der Erfassung des Volumens und der Masse des in einem Behälter enthaltenen Schüttgutes.

Hierfür wird die Füllgutoberfläche mit einem Sendesignal abgescannt und das an der Füllgutoberfläche reflektierte Sendesignal wird daraufhin vom Füllstandradar empfangen und ausgewertet.

Das Abscannen der Füllgutoberfläche kann mechanisch erfolgen, indem die Antenne verschwenkt wird. Auch ist es möglich, das Sendesignal mittels elektronischer Strahlumformung zu verschwenken, also die Hauptabstrahlrichtung des Sendesignals elektronisch einzustellen. Hierfür ist ein Array an Sende- und Empfangselementen erforderlich. Aufgrund der benötigten Vielzahl an einzelnen Sendern sind diese Füllstandradargeräte oft aufwendig in der Herstellung, was zu signifikanten Kosten führen kann.

EP 2 315 045 A1 beschreibt einen Sensor zur Messung von Entfernungen oder Entfernungsänderungen nach dem Signallaufzeitprinzip mittels eines Laserscanners, dessen Strahl über einen Spiegel verkippt werden kann. Ferner ist in der EP 2 315 045 A1 ein Füllstandradar nach dem TDR-Prinzip spezifiziert.

WO 2007/085941 A1 beschreibt einen RFID-Scanner mit einem Antennen Array und mehreren Phasenregelschleifen, denen jeweils ein unterschiedlicher Referenztakt zugeführt wird.

### Zusammenfassung der Erfindung

Es ist eine Aufgabe der Erfindung, ein mehrkanaliges Füllstandradar anzugeben, welches in der Lage ist, die Topologie einer Füllgutoberfläche mit hoher Genauigkeit zu erfassen und welches effizient und kostengünstig herstellbar ist.

Diese Aufgabe wird durch die Merkmale der unabhängigen Patentansprüche gelöst. Weiterbildungen der Erfindung ergeben sich aus den Unteransprüchen und der folgenden Beschreibung.

Ein erster Aspekt der Erfindung betrifft ein Füllstandradar zur Bestimmung der Topologie der Oberfläche des Füllguts. Bei dem Füllgut handelt es sich beispielweise um ein Schüttgut in einem Behälter oder auf einer Halde. Das Füllstandradar weist mindestens zwei Sender und mindestens einen Empfänger sowie eine Steuereinheit auf. Der erste Sender ist mit einer ersten, nur ihm zugeordneten Phasenregelschleife (PLL) verbunden, um ein erstes Sendesignal zu erzeugen. Der zweite Sender ist mit einer zweiten, nur ihm zugeordneten Phasenregelschleife verbunden, um ein zweites Sendesignal zu erzeugen. In anderen Worten ist jedem Sender eine eigene Phasenregelschleife zugeordnet. Ebenso weist der Empfänger eine Phasenregelschleife auf und ist zum Empfang der an der Füllgutoberfläche reflektierten Sendesignale ausgeführt.

Die beiden von den Sendern zeitgleich ausgesendeten Sendesignale überlagern sich und weisen eine Hauptabstrahlrichtung auf, welche über die Phasendifferenz der beiden Sendesignale eingestellt werden kann. Hierfür ist eine Steuereinheit vorgesehen, welche die Startphase für das Ausgangssignal der ersten Phasenregelschleife und die Startphase für das Ausgangssignal der zweiten Phasenregelschleife festlegt, um die Hauptabstrahlrichtung des Füllstandradars zum Abtasten der Füllgutoberfläche zu steuern.

Neben dem ersten und dem zweiten Sender können weitere Sender vorgesehen sein. Ebenso können mehrere Empfänger vorgesehen sein.

Bei den von den Sendern erzeugten Sendesignalen handelt es sich vorzugsweise um frequenzmodulierte Dauerstrichradarsignale (FMCW). Das Vorsehen einer eigenen Phasenregelschleife für jeden Sender und jeden Empfänger ermöglicht es, die Startphasen der einzelnen Sender relativ zueinander einzustellen, so dass die Hauptabstrahlrichtung des Füllstandradars, also die Ausbreitungsrichtung des "Gesamtsendesignals", bei dem es sich um das aus den einzelnen Sendesignalen zusammengesetzte Gesamtsignal handelt, gesteuert werden kann.

Ein weiterer Aspekt der Erfindung betrifft ein Verfahren zum Bestimmen der Topologie der Füllgutoberfläche, bei dem eine erste Startphase für das Ausgangssignal einer ersten Phasenregelschleife und eine zweite Startphase für das Ausgangssignal einer zweiten Phasenregelschleife festgelegt werden, um hierdurch die Hauptabstrahlrichtung des Füllstandradars zum Abtasten der Füllgutoberfläche zu steuern. Das erste Sendesignal wird hierbei durch einen ersten Sender bzw. eine erste Sendeschaltung erzeugt, welche hierfür das Ausgangssignal der ersten Phasenregelschleife nutzt. Entsprechend wird das zweite Sendesignal durch einen zweiten Sender bzw. eine zweite Sendeschaltung erzeugt, welche hierfür das Ausgangssignal der zweiten Phasenregelschleife nutzt. Nach Aussenden der Sendesignale treffen diese auf die Füllgutoberfläche, werden dort reflektiert und die an der Füllgutoberfläche reflektierten Sendesignale werden anschließend durch einen Empfänger des Füllstandmessgeräts empfangen und im Gerät ausgewertet, um daraus die Topologie der Füllgutoberfläche zu berechnen.

In anderen Worten wird jeder Sender und jeder Empfänger durch eine separate PLL in dessen Frequenz geregelt. Jeder Sender und jeder Empfänger erhält das Lokaloszillatorsignal durch seine eigene PLL zur Verfügung gestellt und durch Festlegung der einzelnen Startphasen der Sender mittels dieser PLLs erfolgt eine sendeseitige Strahlformung und somit eine Einstellung der Hauptabstrahlrichtung des Füllstandradars. Insbesondere kann vorgesehen sein, dass eine Schaltungseinheit bzw. die Steuereinheit die Startphase der jeweiligen Sende- und Empfangskanäle gemäß erfasster Kalibrationsparameter einstellt, und diese Schaltungseinheit kann insbesondere dafür verwendet werden, die Hauptstrahlrichtung zeitgleich sendender Sender zu beeinflussen.

Ein weiterer Aspekt der Erfindung betrifft ein Programmelement, das, wenn es von einem Prozessor eines Füllstandradars ausgeführt wird, den Prozessor bzw. das Füllstandradar anleitet, die oben und im Folgenden beschriebenen Verfahrensschritte durchzuführen.

Ein weiterer Aspekt der Erfindung betrifft ein computerlesbares Medium, auf dem das oben beschriebene Programmelement gespeichert ist.

An dieser Stelle sei darauf hingewiesen, dass die im Folgenden hinsichtlich des Füllstandradars beschriebenen Merkmale auch als Verfahrensschritte in dem Verfahren implementiert werden können und umgekehrt.

Insbesondere kann vorgesehen sein, dass die Steuereinheit zur Festlegung der ersten Startphase und der zweiten Startphase derart ausgeführt ist, dass ein herstellungsbedingter Offset der beiden Startphasen kompensierbar ist. Dies kann im Rahmen einer werkseitigen Eichung des Füllstandradargeräts erfolgen, in welcher dafür Sorge getragen wird, dass die Hauptabstrahlrichtung des Füllstandradars immer auch genau in die Richtung weist, die hierfür vorgesehen ist. Diese Eichung bzw. Kalibrierung des Füllstandradars erfolgt durch eine genaue Abstimmung der einzelnen Startphasen relativ zueinander, um herstellungsbedingte, ungewollte Verschiebungen der Startphasen der einzelnen Sender auszugleichen.

Gemäß einer Ausführungsform der Erfindung handelt es sich bei den Phasenregelschleifen der Sender und gegebenenfalls auch bei den Phasenregelschleifen der Empfänger um sogenannte Fractional-N-PLLs (oder fraktionale PLLs oder PLLs mit fraktionalem Teiler).

Beispielsweise können die einzelnen Startphasen der Ausgangssignale der Phasenregelschleifen eingestellt werden, indem der entsprechende Registerwert jeder PLL durch die Steuereinheit eingestellt wird. Die PLL besteht im Wesentlichen aus einem Phasendetektor, einem Schleifenfilter, einem VCO und einem optionalen Frequenzteiler. Der VCO kann auch als ein Teil des HF-Frontends ausgebildet sein. In diesem Falle enthält die PLL alle obigen Komponenten ausgenommen dem VCO.

Somit weist die PLL nicht lediglich einen Phasendetektor und (mehrere) Frequenzteiler auf.

Zur Parametrierung dieser Bausteine sind Speicherzellen (Register) vorhanden, in die Parameter wie Teilerfaktoren, Rampendauer und -steilheit, etc. eingetragen werden. Diese Registerwerte werden beim Einschalten des Geräts von einer Steuereinheit, wie einem Mikrokontroller, über eine Schnittstelle, z.B. SPI, einprogrammiert. Spezielle Fractional-N-PLLs haben die Funktionalität die Startphase des hochfrequenten Ausgangssignals in Bezug auf den niederfrequenten Referenztakt einzustellen. Diese Einstellungen werden ebenfalls über Registerwerte getätigt.

Gemäß einer weiteren Ausführungsform der Erfindung ist, wie auch bereits weiter oben angesprochen, die Steuereinheit zur Festlegung der ersten Startphase und der zweiten Startphase auf Basis von Kalibrationsparametern ausgeführt, welche im Rahmen einer Kalibrationsmessung aufgenommen wurden und in einem Speicher des Messgeräts hinterlegt sind. Hierdurch kann vermieden werden, dass das Füllstandradargerät "schielt", also die Hauptabstrahlrichtung des Sendesignals in eine andere Richtung weist, als durch den Phasenversatz der beiden Startphasen beabsichtigt wurde.

Beispielsweise kann vorgesehen sein, dass der Empfänger auch als Sender eingesetzt werden kann. Ebenso kann vorgesehen sein, dass zumindest einer der Sender auch als Empfänger einsetzbar ist.

Durch die Verwendug eines Sendeempfängers (Transceiver) kann die PLL des Empfängers entfallen. Ebenfalls könnte eine Antenne eingespart werden, wenn Sende- und Empfangsleitung der Schaltung über einen Koppler zusammengeführt sind.

Erfindungsgemäß ist für sämtliche Phasenregelschleifen der Sender und Empfänger ein einziger Referenztaktgeber vorgesehen. Die einzelnen Sender und/oder der/die Empfänger können in einem eindimensionalen, also linearen, oder einem zweidimensionalen, flächigen Array angeordnet sein. Beispielsweise weisen die Sender zueinander einen Abstand von λ/2 auf, wohingegen der Abstand der Empfänger zueinander größer als λ/2 betragen kann, beispielsweise 6 λ/2. In diesem Fall sind beispielsweise sechs Sender und acht Empfänger vorgesehen. Auch kann vorgesehen sein, dass der Abstand der Empfänger zueinander λ/2 beträgt und der Abstand der Sender zueinander 8 λ/2.

Dies kann dann vorgesehen sein, wenn acht Empfänger und sechs Sender vorgesehen sind. Die beiden oben geschilderten Beispiele betreffen eine zeilenförmige, also eindimensionale Anordnung der Sender und Empfänger.

Gemäß einer Ausführungsform der Erfindung sind sämtliche Phasenregelschleifen als separate Bauteile ausgeführt, wohingegen die Sender und Empfänger als separate Radarchips ausgeführt sind, die jeweils an ihre entsprechende Phasenregelschleife angeschlossen werden.

Somit ist es möglich, die Dimensionierung der Antenne nach den tatsächlichen Anforderungen zu gestalten und hierbei standardisierte Bauteile zu versenden.

Im Folgenden werden mit Verweis auf die Figuren Ausführungsbeispiele der Erfindung beschrieben.

### Kurze Beschreibung der Figuren

Fig. 1 zeigt ein Füllstandradar gemäß einem Ausführungsbeispiel der Erfindung, das in einem Behälter installiert ist.
Fig. 2 zeigt ein Blockschaltbild eines Füllstandradars gemäß einem Ausführungsbeispiel der Erfindung.
Fig. 3 zeigt das Blockschaltbild der Fig. 2 mit bestimmten Startphasen der Sender.
Fig. 4 zeigt das Blockschaltbild der Fig. 2 mit anderen Startphasen.
Fig. 5 zeigt das Blockschaltbild der Fig. 2 mit anderen Startphasen.
Fig. 6a zeigt ein Sendesignal von zwei Sendern ohne Phasenversatz.
Fig. 6b zeigt die Sendesignale eines ersten Senders und eines zweiten Senders mit einem ersten Phasenversatz.
Fig. 6c zeigt die Sendesignale eines ersten Senders und eines zweiten Senders mit einem zweiten Phasenversatz.
Fig. 7 zeigt ein Flussdiagramm eines Verfahrens gemäß einem Ausführungsbeispiel der Erfindung.

### Detaillierte Beschreibung von Ausführungsbeispielen

Die Darstellungen in den Figuren sind schematisch und nicht maßstäblich Werden in der folgenden Figurenbeschreibung die gleichen Bezugsziffern verwendet, so bezeichnen diese gleiche oder ähnliche Elemente.

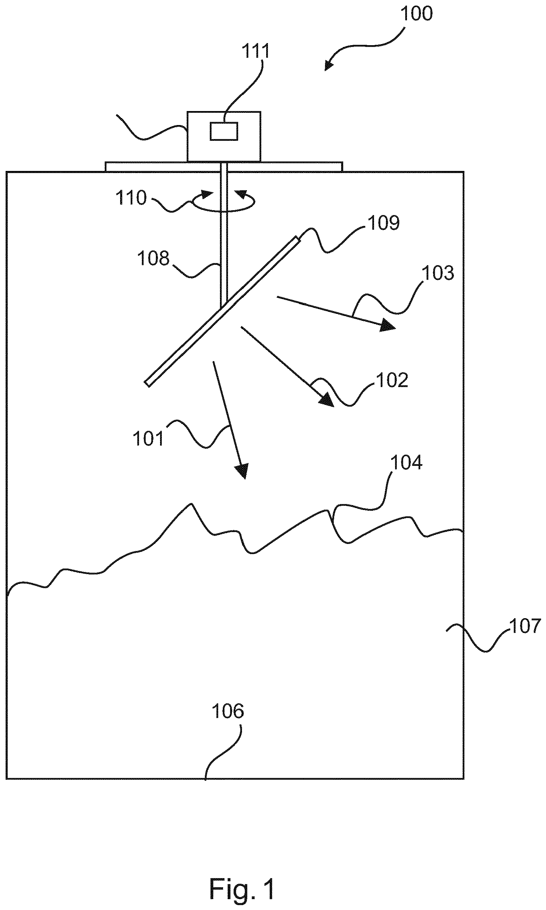

Fig. 1 zeigt ein topologieerfassendes Füllstandradar 100 gemäß einem Ausführugsbeispiel der Erfindung. Das Messgerät ist in der Lage, Echosignale oder Echokurven aus unterschiedlichen Winkelbereichen 101, 102, 103 zu erfassen. Zu jeder erfassten Echokurve wird die Distanz zum jeweiligen Punkt der Oberfläche 104 des Schüttgutes ermittelt. Durch numerische Integration dieser Distanzwerte und unter Postulierung einer ebenen Oberfläche 106 unter dem Schüttgut kann das Volumen der Schüttguthalde 107 ermittelt werden. Bei bekannter Dichte lässt sich weiterhin die Masse an Schüttgut berechnen.

Das Füllstandmessgerät 100 weist eine Antennenhalterung 108 zur Befestigung einer Antenne 109 auf. Je nach Ausgestaltung des Füllstandmessgerätes 100 kann die Antennenhalterung 108 ein mechanisches Verstellen der Hauptstrahlrichtung der Antenne, beispielsweise durch Drehen 110 oder durch Verkippen, ermöglichen.

Weiterhin nutzt das Füllstandmessgerät ein Verfahren der digitalen Strahlformung, um die Hauptabstrahlrichutng des Sendesignals zu steuern. Das Füllstandmessgerät weist hierbei eine aus mehreren Sende- und/oder Empfangselementen bestehende Antenne 109 sowie eine dazu passende Auswerteeinheit 111 zur Implementierung der Verfahren der digitalen Strahlformung auf.

Dabei können verschiedene Radarverfahren eingesetzt werden. Häufig wird das frequenzmodulierte Dauerstrichradarverfahren (Frequency Modulated Continous Wave Radar, FMCW-Radar) verwendet. Dabei erzeugt eine Phasenregelschleife (Phase Locked Loop, PLL) eine Frequenzrampe, die über eine Antenne abgesendet wird. Dieses Signal wird als Lokaloszillatorsignal (LO-Signal) bezeichnet. Das reflektierte Empfangssignal wird mit dem Sendesignal gemischt, wobei die Frequenz des so erzeugten Zwischenfrequenzsignals in linearem Zusammenhang mit dem Abstand des Reflektors (z.B. Schüttgutoberfläche) steht.

Die Verfahren der digitalen Strahlformung nutzen eine Vielzahl solcher Radarschaltungen in einem Gerät und können mit verschiedenen Systemarchitekturen realisiert werden. Zu unterscheiden sind Systeme mit einem Sender und mehreren Empfängern (Single Input Multiple Output, SIMO), Systeme mit mehreren Sendern und einem Empfänger (Multiple Input Single Output, MISO) und Systeme mit mehreren Sendern und mehreren Empfängern (Multiple Input Multiple Output, MIMO).

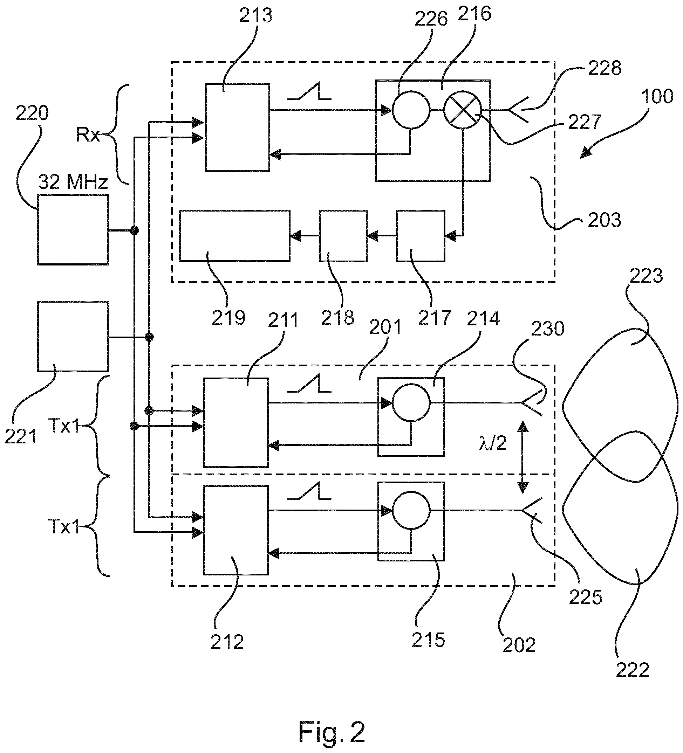

Eine Möglichkeit der Realisierung eines solchen mehrkanaligen Systems ist es, jeden Sender, jeden Empfänger oder eine Kombination aus beiden mit jeweils genau einer separaten PLL anzusteuern. Die einzelne PLL erzeugt dabei ein hochfrequentes, zum Referenzoszillator 220 (vgl. Fig. 2) phasenstabiles Lokaloszillatorsignal (LO-Signal). Den einzelnen PLLs wird das gleiche Taktsignal zugeführt, das aus einer einzigen Referenz, beispielsweise einem Quarzoszillator, abgeleitet wird. Somit besitzen die erzeugten LO-Signale immer eine konstante Phasendifferenz zueinander.

Dieses Taktsignal kann um ein Vielfaches niederfrequenter ausgeführt sein als das LO-Signal, was Vorteile hinsichtlich der Signalaufteilung mit sich bringen kann. Während das LO-Signal beispielsweise Signale mit einer Frequenz im unteren Gigahertz-Bereich aufweist, kann das Referenzsignal der Taktquelle Signale mit einer Frequenz im unteren Megahertz-Bereich aufweisen. Die Signalaufteilung ist daher hinsichtlich Leitungsgeometrie, Substrat, Leiterbahnstruktur, etc. wesentlich unkritischer und kostengünstiger.

Bei der Verwendung des FMCW-Radarverfahrens wird als Signalform eine Frequenzrampe verwendet. In dem mehrkanaligen System ist eine zentrale Steuereinheit 221 (vgl. Fig. 2), z.B. ein Mikroprozessor, DSP oder FPGA, vorgesehen, die jeder PLL mittels eines Triggersignals den Befehl gibt, die Frequenzrampe und somit eine Messung zu starten.

Jede PLL erzeugt somit eine separate Frequenzrampe, die mit den Frequenzrampen der anderen PLLs identisch ist. In den Sendern wird diese Frequenzrampe abgesendet und in den Empfängern das empfangene Signal mit dieser Frequenzrampe gemischt, um so ein Zwischenfrequenzsignal zu erhalten.

Um bei MISO Systemen eine Strahlformung durchführen zu können, gibt es die Möglichkeit, analoge Phasenschieber in den Sendepfad einzubauen, die die Startphasen der Sender beeinflussen. Durch diese Beeinflussung ist eine Strahlschwenkung der Sendekeule möglich. Nachteilig an den Phasenschiebern ist, dass diese aufwändig und teuer sind.

Aus diesem Grund werden gemäß einem Ausführungsbeispiel der Erfindung keine analogen Phasenschieber verwendet, sondern die einzelnen PLLs der Sendeschaltungen gezielt angesteuert.

Spezielle PLL Bausteine, die ein gebrochen rationales Vielfaches des Referenztakts als Ausgangsfrequenz ausgeben können (Fractional-N-PLLs), haben oftmals die Funktionalität, deren Ausgangssignal mit einer initialen Startphase zu belegen.

Diese Funktionalität wird hierbei genutzt, um die Startphase des Ausgangssignals paralleler PLLs in definierter Art und Weise zu belegen, um eine Strahlformung der Sendekeule zu erzielen. Durch das Einstellen eines Registerwerts jeder PLL kann die Startphase des zugehörigen Hochfrequenzsignals festgelegt werden.

Fig. 2 zeigt ein Blockschaltbild eines Füllstandradars 100 gemäß einem Ausführungsbeispiel der Erfindung. Das Füllstandradar weist zwei (oder mehr) Sender oder Sendeschaltungen 201, 202 auf, sowie eine oder mehr Empfänger oder Empfangsschaltungen 203.

Jede Sendeschaltung besitzt eine eigene Phasenregelschleife 211, 212, sowie einen spannungsgesteuerten Oszillator (VCO) 214, 215, dem das entsprechende Ausgangssignal der PLL zugeführt wird und welcher der PLL ein entsprechendes Rückkopplungssignal bereitstellt. An dem Ausgang des VCO 214, 215 ist eine Sendeantenne 230, 225 angeschlossen, welche das entsprechend erzeugte Sendesignal mit zugehöriger Richtcharakteristik 223, 222 aussendet.

Der Empfänger 203 weist ebenfalls eine eigene Phasenregelschleife 213 sowie einen VCO 226 auf. Am Ausgang des VCO 226 ist ein Mischer 227 angeschlossen, an den die Empfangsantenne 228 angeschlossen ist. VCO 226 und Mischer 227 können auf einem gemeinsamen Chip 216 angeordnet sein. Am zweiten Ausgang des Mischers befindet sich ein Zwischenfrequenzverstärker 217, der gleichzeitig als Anti-Aliasing-Filter zu verstehen ist und sein Ausgangssignal dem Analogdigitalwandler 218 zuführt, dessen Ausgangssignal dann in die Signalverarbeitungseinheit 219 geleitet wird, welche Füllstand und Oberflächentopologie bestimmen kann.

Es ist ein Referenztaktgeber 220 vorgesehen, der jeder PLL 211, 212, denselben Referenztakt zur Verfügung stellt. Darüber hinaus ist eine Steuereinheit 221 vorgesehen, welche die PLLs steuert und den Phasenversatz der Ausgangssignale der PLLs einstellen kann. Fractional-N-PLL-Bausteine erlauben es, die Phasenlage des hochfrequenten Ausgangssignals der PLL digital einzustellen. Diese Funktionalität wird bei dem Mehr-Sender-System dafür verwendet, die Hauptstrahlrichtung des Antennensystems einzustellen.

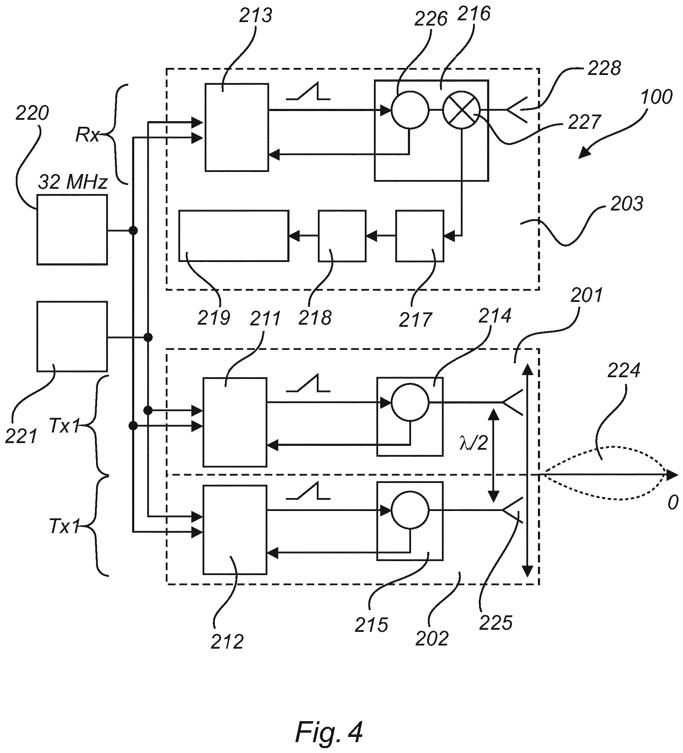

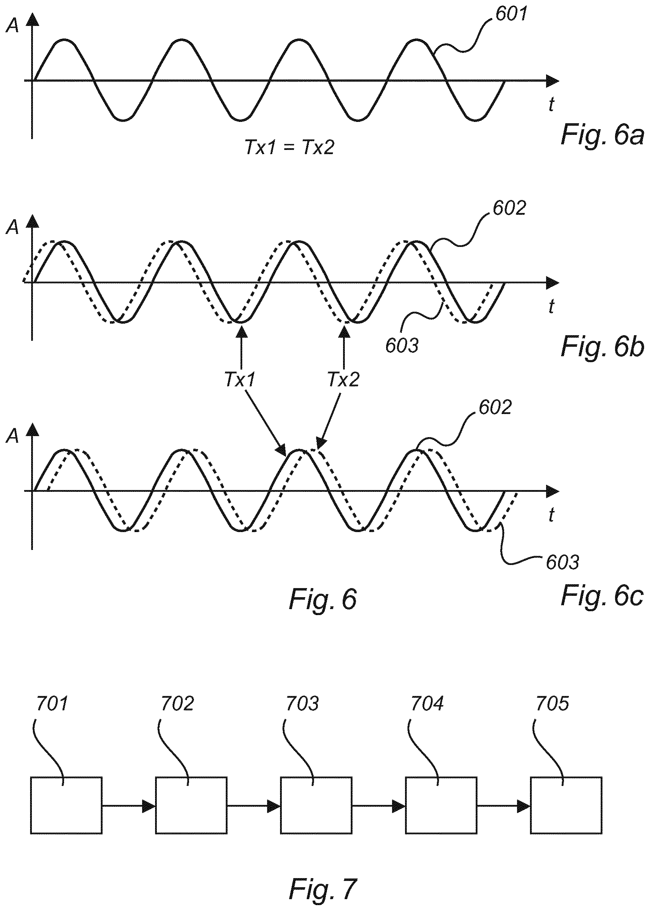

Wie in Fig. 2 gezeigt, haben beide Sender unabhängig voneinander betrachtet die gleiche Abstrahlcharakteristik. Unter der Annahme, dass die Antennen 230, 225 der Sendeschaltungen 201, 202 einen räumlichen Abstand von der halben mittleren Freiraumwellenlänge des Sendesignals aufweisen, und beide Sender 201, 202 mit dem gleichen Sendesignal 601 (vgl. Fig. 6a) beaufschlagt werden, addieren sich die einzelnen Antennendiagramme zu einer Abstrahlcharakteristik, die einen schmaleren Öffnungswinkel und ca. 3 dB mehr Gain aufweist (vgl. Sendekeule 224 in Fig. 4).

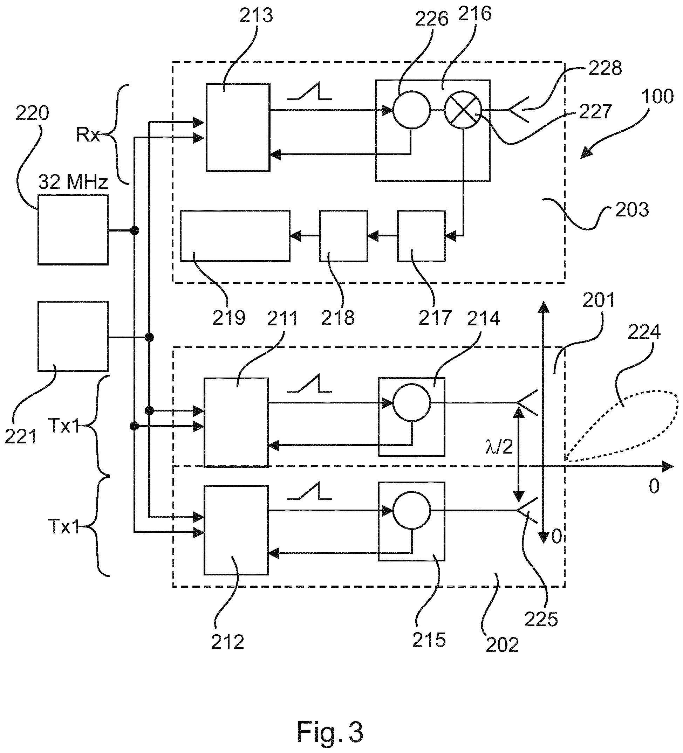

Weiterhin ändert sich die Hauptabstrahlrichtung bei Belegung der Sender mit einer initialen Startphase. Wird, wie in Fig. 6b gezeigt, beim Sender 202 eine voreilende Phase des Sendesignals 602 im Vergleich zum Sendesignal 603 des ersten Senders 201 eingestellt, so ändert sich die Hauptstrahlrichtung in eine positive Winkelrichtung (vgl. Sendekeule 224 in Fig. 3).

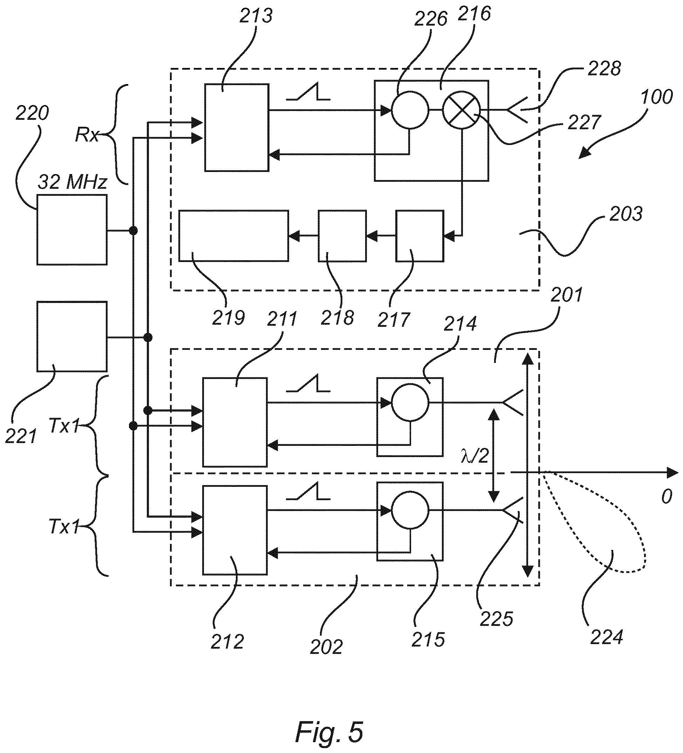

Wird die Phase hingegen, wie in Fig. 6c gezeigt, beim Sender 202 als nacheilende Phase eingestellt, so ändert sich die Hauptstrahlrichtung in eine negative Winkelrichtung (vgl. Sendekeule 224 in Fig. 5).

Auch kann diese Funktionalität dafür verwendet werden, vorher ermittelte Kalibrationsdaten sowohl sende- als auch empfangsseitig auf die jeweiligen Sende-/Empfangskanäle anzuwenden.

Ein Grund für eine solche Kalibration besteht darin, dass alle verwendeten Bauteile und signalführende Elemente (z.B. Leitungen) aufgrund von Toleranzen Unterschiede im Übertragungsverhalten zueinander aufweisen können.

Es ist daher vorteilhaft, in einer geeigneten Messumgebung Messdaten des Gesamtsystems aufzunehmen, daraus Kalibrationsparameter, wie beispielsweise einen Offset der Startphase der entsprechenden Sendeschaltung, zu ermitteln und diese bei späteren Messungen in der Messung zu berücksichtigen bzw. zu kompensieren, um die oben erwähnten systematische Fehler auszugleichen.

Die Kalibration der Startphase kann mit der oben angesprochenen Funktionalität der Fractional-N-PLL durchgeführt werden, und erfordert somit keine weiteren Bauteile, was zu einem preisgünstigen Aufbau der zugehörigen Elektronik führen kann.

Fig. 7 zeigt ein Flussdiagramm eines Verfahrens gemäß einem Ausführungsbeispiel der Erfindung.

In Schritt 701 wird eine erste Startphase für das Ausgangssignal einer ersten Phasenregelschleife festgelegt. In Schritt 702 wird eine Startphase für das Ausgangssignal einer zweiten Phasenregelschleife festgelegt, um die Hauptabstrahlrichtung des Füllstandradars zum Abtasten der Füllgutoberfläche zu steuern. In Schritt 703 wird ein erstes Sendesignal durch einen ersten Sender erzeugt, der hierfür das Ausgangssignal der ersten Phasenregelschleife nutzt und in Schritt 704 wird ein zweites Sendesignal durch einen zweiten Sender erzeugt, der hierfür das Ausgangssignal der zweiten Phasenregelschleife nutzt (dessen Startphase der Startphase der ersten Phasenregelschleife nacheilt). Diese beiden Signale werden ausgesendet und weisen, während sie sich überlagern, eine Hauptabstrahlrichtung auf, welche auf einen bestimmten Punkt der Füllgutoberfläche gerichtet ist. An diesem Punkt wird das Gesamtsendesignal reflektiert und in Schritt 705 von einem Empfänger des Füllstandradars empfangen und im Folgenden ausgewertet. Aus der Vielzahl an empfangenen Signalen, wovon jedes auf einen anderen Punkt auf der Füllgutoberfläche gerichtet ist, kann die Topologie der Füllgutoberfläche berechnet werden. Im Rahmen einer Kalibrierung kann dem Gerät "beigebracht" werden, wie die Startphasen relativ zueinander einzustellen sind, um einen bestimmten Punkt auf der Füllgutoberfläche zu erreichen (in diesem Fall läuft die Hauptabstrahlrichtung des Füllstandradars durch eben diesen Punkt). Dies kann im Rahmen einer Kalibrierung erfolgen, so dass das Füllstandmessgerät danach die Hauptabstrahlrichtung sehr genau durch Wahl der entsprechenden Startphasen der Ausgangssignale der Phasenregelschleifen der Sender und insbesondere deren zeitlichen Versatz einstellen kann.

Es kann vorgesehen sein, dass die Kalibration nur für eine einzige Hauptstrahlrichtung erfolgt. Die restlichen Werte für die entsprechenden Phasendifferenzen können dann rechnerisch ermittelt werden.

Ergänzend sei daraufhingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandradar (100), ausgeführt zur Bestimmung einer Topologie einer Füllgutoberfläche (104), aufweisend:
einen ersten Sender (201) mit einer ersten Phasenregelschleife (211) zur Erzeugung eines ersten Sendesignals in Form einer ersten Frequenzrampe;
einen zweiten Sender (202) mit einer zweiten Phasenregelschleife (212) zur Erzeugung eines zweiten Sendesignals in Form einer zweiten Frequenzrampe;
einen Empfänger (203) mit einer dritten Phasenregelschleife (213) zum Empfang der an der Füllgutoberfläche reflektierten Sendesignale;
einen einzigen Referenztaktgeber (220) für sämtliche Phasenregelschleifen (211, 212, 213), der jeder Phasenregelschleife denselben Referenztakt zu Verfügung stellt;
eine Steuereinheit (221) zur Steuerung der ersten Phasenregelschleife und der zweiten Phasenregelschleife und zur Einstellung eines Phasenversatzes der Ausgangssignale der ersten und zweiten Phasenregelschleife, zur Festlegung einer ersten Startphase für das Ausgangssignal der ersten Phasenregelschleife mittels eines ersten Triggersignals und einer zweiten Startphase für das Ausgangssignal der zweiten Phasenregelschleife mittels eines zweiten Triggersignals, um die Hauptabstrahlrichtung des Füllstandradars zum Abtasten der Füllgutoberfläche zu steuern.

2. Füllstandradar nach Anspruch 1,
wobei es sich bei den Phasenregelschleifen (211, 212) der Sender (201, 202) um Fractional-N-PLLs handelt.

3. Füllstandradar nach Anspruch 1 oder 2,
wobei es sich bei der Phasenregelschleife (213) des Empfängers (203) um eine Fractional-N-PLL handelt.

4. Füllstandradar nach einem der vorhergehenden Ansprüche,
wobei die Steuereinheit (104) zur Festlegung der ersten Startphase für das Ausgangssignal der ersten Phasenregelschleife und der zweiten Startphase für das Ausgangssignal der zweiten Phasenregelschleife die entsprechenden Registerwerte der ersten und zweiten Phasenregelschleife einstellt.

5. Füllstandradar nach einem der vorhergehenden Ansprüche,
wobei die Steuereinheit (221) zur Festlegung der ersten Startphase und der zweiten Startphase derart ausgeführt ist, dass ein herstellungsbedingter Offset der beiden Startphasen kompensierbar ist.

6. Füllstandradar nach Anspruch 5,
wobei die Steuereinheit (221) zur Festlegung der ersten Startphase und der zweiten Startphase auf Basis von Kalibrationsparametern ausgeführt ist.

7. Füllstandradar nach einem der vorhergehenden Ansprüche,
wobei das Füllstandradar (100) ausgeführt ist, den Empfänger (203) zusätzlich auch als Sender einzusetzen.

8. Füllstandradar nach einem der vorhergehenden Ansprüche,
wobei das Füllstandradar ausgeführt ist, zumindest einen der Sender (201, 202) zusätzlich auch als Empfänger einzusetzen.

9. Füllstandradar nach einem der vorhergehenden Ansprüche, aufweisend:
eine Vielzahl an Sendern (201, 202), welche in einem eindimensionalen Array oder einem zweidimensionalen Array angeordnet sind.

10. Verfahren zum Bestimmen der Topologie der Füllgutoberfläche (104) mit einem Füllstandradar nach einem der Ansprüche 1 bis 9, aufweisend die Schritte:
Bereitstellen desselben Referenztakts für sämtliche Phasenregelschleifen (211, 212, 213) eines Füllstandradars (100);
Steuern der ersten Phasenregelschleife und der zweiten Phasenregelschleife und Einstellen eines Phasenversatzes der Ausgangssignale der ersten und zweiten Phasenregelschleife, zum Festlegen einer ersten Startphase für das Ausgangssignal einer ersten Phasenregelschleife mittels eines ersten Triggersignals und einer zweiten Startphase für das Ausgangssignal einer zweiten Phasenregelschleife mittels eines zweiten Triggersignals, um die Hauptabstrahlrichtung des Füllstandradars zum Abtasten der Füllgutoberfläche zu steuern;
Erzeugen eines ersten Sendesignals durch einen ersten Sender (201), der hierfür das Ausgangssignal der ersten Phasenregelschleife (211) in Form einer ersten Frequenzrampe nutzt;
Erzeugen eines zweiten Sendesignals durch einen zweiten Sender (202), der hierfür das Ausgangssignal der zweiten Phasenregelschleife (212) in Form einer zweiten Frequenzrampe nutzt;
Empfangen der an der Füllgutoberfläche reflektierten Sendesignale.

11. Verfahren nach Anspruch 10,
wobei zur Festlegung der ersten Startphase für das Ausgangssignal der ersten Phasenregelschleife und der zweiten Startphase für das Ausgangssignal der zweiten Phasenregelschleife die entsprechenden Registerwerte der ersten und zweiten Phasenregelschleife eingestellt werden.

12. Programmelement, das, wenn es auf einem Prozessor eines Füllstandradars ausgeführt wird, den Prozessor anleitet, die Schritte des Verfahrens gemäß Anspruch 10 oder 11 durchzuführen.

13. Computerlesbares Medium, auf dem ein Programmelement nach Anspruch 12 gespeichert ist.

14. Verwendung eines Füllstandradars (100) nach einem der Ansprüche 1 bis 9 oder eines Verfahrens nach Anspruch 10 oder 11 zur Erfassung einer Topologie einer Füllgutoberfläche.

## Claims

1. A fill level radar (100) designed to determine a topology of a filling material surface (104), comprising:
a first transmitter (201) having a first phase-locked loop (211) for generating a first transmit signal in the form of a first frequency ramp;
a second transmitter (202) having a second phase-locked loop (212) for generating a second transmission signal in the form of a second frequency ramp;
a receiver (203) having a third phase-locked loop (213) for receiving the transmitted signals reflected at the filling material surface;
a single reference clock generator (220) for all of said phase locked loops (211, 212, 213) providing the same reference clock to each phase locked loop;
a control unit (221) for controlling the first phase-locked loop and the second phase-locked loop and for adjusting a phase offset of the output signals of the first and second phase-locked loops, for determining a first start phase for the output signal of the first phase-locked loop by means of a first trigger signal and a second start phase for the output signal of the second phase-locked loop by means of a second trigger signal, in order to control the main radiation direction of the level radar for scanning the filling material surface.

2. The fill level radar according to claim 1,
wherein the phase locked loops (211, 212) of the transmitters (201, 202) are fractional-N-PLLs.

3. The fill level radar according to claim 1 or 2,
wherein the phase-locked loop (213) of the receiver (203) is a fractional-N-PLL.

4. The fill level radar according to any one of the preceding claims,
wherein the control unit (104) sets the corresponding register values of the first and second phase-locked loops to determine the first start phase for the output signal of the first phase-locked loop and the second start phase for the output signal of the second phase-locked loop.

5. The fill level radar according to one of the previous claims,
wherein the control unit (221) for determining the first start phase and the second start phase is designed in such a way that a production-related offset of the two start phases can be compensated.

6. The fill level radar according to claim 5,
wherein the control unit (221) is adapted to determine the first start phase and the second start phase based on calibration parameters.

7. The fill level radar according to any one of the preceding claims,
wherein the level radar (100) is designed to additionally use the receiver (203) also as transmitter.

8. The fill level radar according to any one of the preceding claims,
wherein the level radar is designed to use at least one of the transmitters (201, 202) additionally also as a receiver.

9. The fill level radar according to any one of the preceding claims, comprising:
a plurality of transmitters (201, 202) arranged in a one-dimensional array or a two-dimensional array.

10. A method for determining the topology of the filling material surface (104) by means of a level radar according to any one of the preceding claims 1 to 9, comprising the steps:
providing the same reference clock for all phase locked loops (211, 212, 213) of a level radar (100);
controlling the first phase-locked loop and the second phase-locked loop and adjusting a phase offset of the output signals of the first and second phase-locked loops to set a first start phase for the output signal of a first phase-locked loop by means of a first trigger signal and a second start phase for the output signal of a second phase-locked loop by means of a second trigger signal to control the main radiation direction of the level radar for scanning the filling material surface;
generating a first transmission signal by a first transmitter (201) using therefor the output signal of the first phase-locked loop (211) in the form of a first frequency ramp;
generating a second transmission signal by a second transmitter (202), which uses the output signal of the second phase-locked loop (212) in the form of a second frequency ramp;
receiving the transmitted signals reflected at the filling material surface.

11. The method according to claim 10,
wherein the corresponding register values of the first and second phase-locked loops are set to determine the first start phase for the output signal of the first phase-locked loop and the second start phase for the output signal of the second phase-locked loop.

12. A program element which, when executed on a processor of a fill level radar, instructs the processor to perform the steps of the method of claim 10 or 11.

13. A computer-readable medium on which a program element according to claim 12 is stored.

14. Using a level radar (100) according to any of claims 1 to 9 or a method according to claim 10 or 11 to detect a topology of a filling material surface.

## Revendications

1. Radar de niveau de remplissage (100) conçu pour déterminer une topologie de la surface d'un produit de remplissage (104), présentant :
un premier émetteur (201) avec une première boucle à verrouillage de phase (211) pour générer un premier signal d'émission sous la forme d'une première rampe de fréquence ;
un deuxième émetteur (202) avec une deuxième boucle à verrouillage de phase (212) pour générer un deuxième signal d'émission sous la forme d'une deuxième rampe de fréquence ;
un récepteur (203) avec une troisième boucle à verrouillage de phase (213) pour recevoir les signaux d'émission réfléchis à la surface du produit de remplissage ;
une seule horloge de référence (220) pour toutes les boucles à verrouillage de phase (211, 212, 213), qui fournit le même signal d'horloge de référence à chaque boucle à verrouillage de phase ;
une unité de commande (221) pour commander la première boucle à verrouillage de phase et la deuxième boucle à verrouillage de phase et pour régler un déphasage des signaux de sortie des première et deuxième boucles à verrouillage de phase, pour définir une première phase initiale pour le signal de sortie de la première boucle à verrouillage de phase au moyen d'un premier signal de déclenchement et une deuxième phase initiale pour le signal de sortie de la deuxième boucle à verrouillage de phase au moyen d'un deuxième signal de déclenchement, afin de commander la direction principale de rayonnement du radar de niveau de remplissage pour le balayage de la surface du produit de remplissage.

2. Radar de niveau de remplissage selon la revendication 1,
dans lequel les boucles à verrouillage de phase (211, 212) des émetteurs (201, 202) sont des PLL N-fractionnaires.

3. Radar de niveau de remplissage selon la revendication 1 ou 2,
dans lequel la boucle à verrouillage de phase (213) du récepteur (203) est une PLL N-fractionnaire.

4. Radar de niveau de remplissage selon l'une des revendications précédentes,
dans lequel, pour définir la première phase initiale pour le signal de sortie de la première boucle à verrouillage de phase et la deuxième phase initiale pour le signal de sortie de la deuxième boucle à verrouillage de phase, l'unité de commande (104) règle les valeurs de registre correspondantes des première et deuxième boucles à verrouillage de phase.

5. Radar de niveau de remplissage selon l'une des revendications précédentes,
dans lequel, pour définir la première phase initiale et la deuxième phase initiale, l'unité de commande (221) est conçue de manière à pouvoir compenser un décalage des deux phases initiales dû à la fabrication.

6. Radar de niveau de remplissage selon la revendication 5,
dans lequel l'unité de commande (221) est conçue pour définir la première phase initiale et la deuxième phase initiale sur la base de paramètres d'étalonnage.

7. Radar de niveau de remplissage selon l'une des revendications précédentes,
dans lequel le radar de niveau de remplissage (100) est conçu pour utiliser le récepteur (203) en plus comme émetteur.

8. Radar de niveau de remplissage selon l'une des revendications précédentes,
dans lequel le radar de niveau de remplissage est conçu pour utiliser au moins un des émetteurs (201, 202) en plus comme récepteur.

9. Radar de niveau de remplissage selon l'une des revendications précédentes, présentant :
une pluralité d'émetteurs (201, 202) disposés dans un réseau unidimensionnel ou un réseau bidimensionnel.

10. Procédé pour déterminer la topologie de la surface d'un produit de remplissage (104) avec un radar de niveau de remplissage selon l'une des revendications 1 à 9 précédentes, comprenant les étapes consistant à :
fournir le même signal d'horloge de référence à toutes les boucles à verrouillage de phase (211, 212, 213) d'un radar de niveau de remplissage (100) ;
commander la première boucle à verrouillage de phase et la deuxième boucle à verrouillage de phase et régler un déphasage des signaux de sortie des première et deuxième boucles à verrouillage de phase pour définir une première phase initiale pour le signal de sortie d'une première boucle à verrouillage de phase au moyen d'un premier signal de déclenchement et une deuxième phase initiale pour le signal de sortie d'une deuxième boucle à verrouillage de phase au moyen d'un deuxième signal de déclenchement, afin de commander la direction principale de rayonnement du radar de niveau de remplissage pour le balayage de la surface du produit de remplissage ;
générer un premier signal d'émission par un premier émetteur (201), qui utilise pour cela le signal de sortie de la première boucle à verrouillage de phase (211), sous la forme d'une première rampe de fréquence ;
générer un deuxième signal d'émission par un deuxième émetteur (202), qui utilise pour cela le signal de sortie de la deuxième boucle à verrouillage de phase (212), sous la forme d'une deuxième rampe de fréquence ;
recevoir les signaux d'émission à la surface du produit de remplissage.

11. Procédé selon la revendication 10,
dans lequel, pour définir la première phase initiale pour le signal de sortie de la première boucle à verrouillage de phase et la deuxième phase initiale pour le signal de sortie de la deuxième boucle à verrouillage de phase, les valeurs de registre correspondantes des première et deuxième boucles à verrouillage de phase sont réglées.

12. Élément de programme qui, lorsqu'il est exécuté sur un processeur d'un radar de niveau de remplissage, amène le processeur à mettre en œuvre les étapes du procédé selon la revendication 10 ou 11.

13. Support lisible par ordinateur sur lequel est stocké un élément de programme selon la revendication 12.

14. Utilisation d'un radar de niveau de remplissage (100) selon l'une des revendications 1 à 9 ou d'un procédé selon la revendication 10 ou 11 pour détecter une topologie de la surface d'un produit de remplissage.
